(19)

Europäisches
Patentamt
European
Patent Office
Office européen
des brevets

(11)  **EP 3 620 291 A1**

(12)  **EUROPEAN PATENT APPLICATION**

(43) Date of publication:
**11.03.2020  Bulletin 2020/11**

(21) Application number: **18211613.7**

(22) Date of filing: **11.12.2018**

(51) Int Cl.:
*B29C 64/129* *(2017.01)*      *B29C 64/393* *(2017.01)*
*B29C 64/241* *(2017.01)*      *B33Y 10/00* *(2015.01)*
*B33Y 50/02* *(2015.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **04.09.2018  CN 201811025213**

(71) Applicants:
 • **XYZprinting, Inc.**
   **New Taipei City 22201 (TW)**
 • **Kinpo Electronics, Inc.**
   **New Taipei City 22201 (TW)**

(72) Inventors:
 • **NI, Chih-Ming**
   **22201 New Taipei City (TW)**

 • **LU, Kuan-Yi**
   **22201 New Taipei City (TW)**
 • **CHEN, Chun-Jui**
   **22201 New Taipei City (TW)**
 • **HUANG, Chen-Fu**
   **22201 New Taipei City (TW)**
 • **LEE, An-Hsiu**
   **22201 New Taipei City (TW)**
 • **LIN, Tsai-Yi**
   **22201 New Taipei City (TW)**

(74) Representative: **2K Patentanwälte Blasberg
Kewitz & Reichel
Partnerschaft mbB
Schumannstrasse 27
60325 Frankfurt am Main (DE)**

(54)    **3D PRINTING METHOD**

(57)    A 3D printing method is provided. A stereolithography 3D printer (2) selects one of multiple layers of print data sequentially, makes a modeling plane be a default thickness (h) away from a material tank (23), irradiates heading to the modeling plane according to the selected layer of the print data for printing one layer of slice physical model (421-422, 431-433), makes the modeling plane detach from light-curable materials (41) in the material tank (23), rotates the material tank (23) for making an angle difference between angles before and after rotation be within a default angle interval, and performs above steps repeatedly until completion of a 3D physical model.

FIG.9

## Description

## BACKGROUND OF THE INVENTION

## Field of the Invention

The technical field relates to a method and more particularly related to a 3D printing method.

## Description of Related Art

A stereolithography 3D printer of the related art has an ability to cure the light-curable materials into a 3D physical model by light-irradiating. More specifically, the stereolithography 3D printer comprises a curing platform, a material tank, and a light module. The material tank is used to accommodate the fluid light-curable materials, a bottom of the material tank is made by a light-transmissive material (such as light-transmissive acrylic), and a light-transmissive demodeling film (such as silicon film or Teflon film) is laid on the bottom of the material tank. A top surface of above-mentioned demodeling film is smoother than a top surface of a worktop of the curing platform, so as to make the cured light-curable materials (namely the 3D physical model) attach to the curing platform and do not stick on the material tank to prevent the printing from failure.

However, as the times of printing increases, the bottom or the demodeling film of the material tank may deteriorate. For example, as the times of irradiation increases, a light-transmittance of the bottom or the demodeling film may reduce because of metamorphism (such as blushing). In another example, as the times of peeling the 3D physical model increases, the demodeling film may be peeled from the bottom of the material tank. Moreover, during 3D printing, the light-curable materials located at a position with metamorphism may be incompletely cured or stick the material tank, such that failure of the printing.

Furthermore, in general, during 3D printing, all of the positions of the material tank do not be used to print evenly (namely, only the partial positions of the material tank may be irradiated and used to peel the 3D physical model), such that only part of the printing regions are metamorphic.

Moreover, when any region of the material tank is metamorphic (namely the end of the material tank's life), the user must replace a new material tank or re-lay a new demodeling film for preventing printing from failure. Above problem significantly increase the maintenance costs.

## SUMMARY OF THE INVENTION

It is an object of the present invention to provide an enhanced 3D printing method applied to (for use in) a stereolithography 3D printer enabling a reliable 3D printing at high quality at low maintenance costs.

This problem is solved by a 3D printing method applied to a stereolithography 3D printer as claimed by claim 1. Further advantageous embodiments are the subject-matter of the dependent claims.

The 3D printing method according to the present invention particularly has the ability to delay time of the metamorphism happening.

One of the exemplary embodiments, a 3D printing method applied to a stereolithography 3D printer, the stereolithography 3D printer comprises a light module, a curing platform, a rotating module and a material tank, the 3D printing method comprises: selecting one layer of print data; making a modeling plane of the curing platform be a default thickness away from a bottom of the material tank; controlling the light module to irradiate heading to the modeling plane according to the selected layer of print data for printing one layer of slice physical model; making the modeling plane leave from the light-curable materials in the material tank; rotating the material tank by the rotating module, wherein a difference between an angle of the material tank before rotation and an angle of the material tank after rotation is an offset angle, the offset angle is within one of three angle intervals, the three angle intervals are 0 degrees to 60 degrees, 120 degrees to 240 degrees, and 300 degrees to 360 degrees; and, performing above steps repeatedly until all of the multiple layers of the slice physical models have been printed and stack as a 3D physical model.

The 3D printing method according to the present invention can effectively increase a life of the material tank and improve a stripe effect on the 3D physical model.

## BRIEF DESCRIPTION OF DRAWING

The features of the present disclosed example believed to be novel are set forth with particularity in the appended claims. The present disclosed example itself, however, may be best understood by reference to the following detailed description of the present disclosed example, which describes an exemplary embodiment of the present disclosed example, taken in conjunction with the accompanying drawings, in which:

Fig. 1A is a first schematic view of metamorphism;
Fig. 1B is a second schematic view of metamorphism;
FIG. 2 is an architecture diagram of a stereolithography 3D printer according to one embodiment of the present disclosed example;
Fig. 3 is a schematic view of appearance of a 3D printer according to one embodiment of the present disclosed example;
Fig. 4 is a look-down schematic view of moving material tank according to one embodiment of the present disclosed example;
Fig. 5A is a first sectional schematic view of delaying a time of a metamorphism happening according to one embodiment of the present disclosed example;

Fig. 5B is a second sectional schematic view of delaying a time of a metamorphism happening according to one embodiment of the present disclosed example;

Fig. 6A is a first sectional schematic view of forming stripes according to one embodiment of the present disclosed example;

Fig. 6B is a second sectional schematic view of forming stripes according to one embodiment of the present disclosed example;

Fig. 6C is a third sectional schematic view of forming stripes according to one embodiment of the present disclosed example;

Fig. 6D is a fourth sectional schematic view of forming stripes according to one embodiment of the present disclosed example;

Fig. 6E is a schematic view of stripes according to one embodiment of the present disclosed example;

Fig. 7A is a schematic view of improving stripe effect according to one embodiment of the present disclosed example;

Fig. 7B is a schematic view of improving stripe effect according to one embodiment of the present disclosed example;

Fig. 7C is a schematic view of improving stripe effect according to one embodiment of the present disclosed example;

Fig. 8A is a schematic view of stripes formed by Fig. 7A;

Fig. 8B is a schematic view of stripes formed by Fig. 7B;

Fig. 8C is a schematic view of stripes formed by Fig. 7C;

Fig. 9 is a flowchart of a 3D printing method according to a first embodiment of the present disclosed example;

Fig. 10 is a detailed flowchart of rotating material tank according to a second embodiment of the present disclosed example; and

Fig. 11 is a detailed flowchart of supplement to light-curable materials according to a third embodiment of the present disclosed example.

## DETAILED DESCRIPTION OF THE INVENTION

In cooperation with attached drawings, the technical contents and detailed description of the present disclosed example are described thereinafter according to some exemplary embodiments, being not used to limit its executing scope. Any equivalent variation and modification made according to appended claims is all covered by the claims claimed by the present disclosed example.

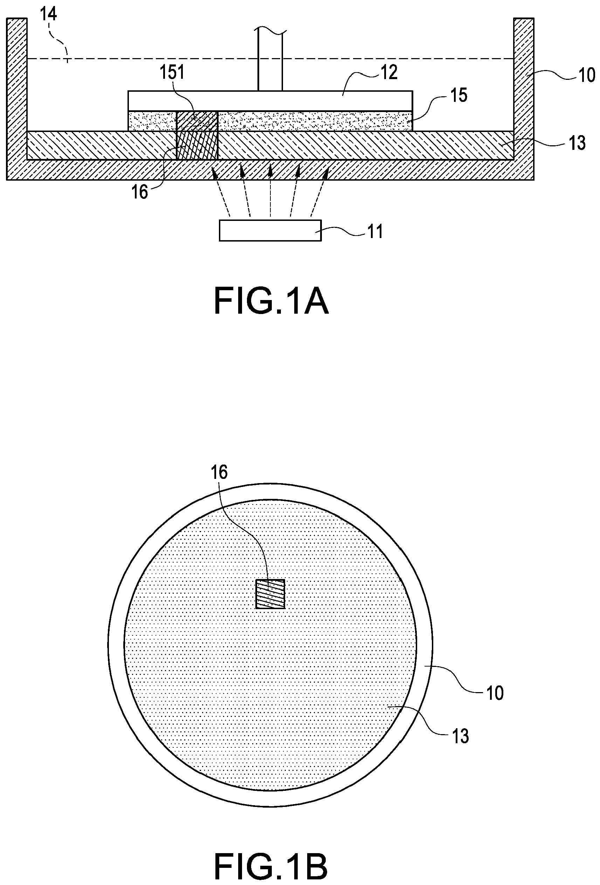

Please refer to Fig. 1A and Fig. 1B simultaneously, Fig. 1A is a first schematic view of metamorphism, and Fig. 1B is a second schematic view of metamorphism. Fig. 1A and Fig. 1B are used to exemplary explain the technical problems solved by the present disclosed example that a life of the material tank is too short.

As shown in Fig. 1A, in general, a stereolithography 3D printer (take an uplight stereolithography 3D printer for example) comprises a material tank 10, a light module 11 and a curing platform 12.) The material tank 10 is used to accommodate the fluid light-curable materials 14, and a demodeling film 13 is laid on the bottom of the material tank 10.

During 3D printing, the stereolithography 3D printer is configured to control the light module 11 to irradiate heading to the bottom of the material tank 10 and the demodeling film 13 for curing the light-curable materials 14 upon the demodeling film 13 into one layer of slice physical model 15.

After long-term irradiation, partial region(s) of the bottom of the material tank 10 or the demodeling film 13 (such as a metamorphic region 16 of the demodeling film 13) may be metamorphic. When the metamorphic region 16 exists, a corresponding position 151 of the printed slice physical model 15 may happen the effect of incomplete curing, sticking the material tank 10 and so on, such that print failure.

Moreover, as shown in Fig. 1B, although an area of the metamorphic region 16 in the demodeling film 13 is very small, the user must replace the new demodeling film 13 because of the metamorphic region 16 being possible to make printing fail, such that the maintenance cost increases.

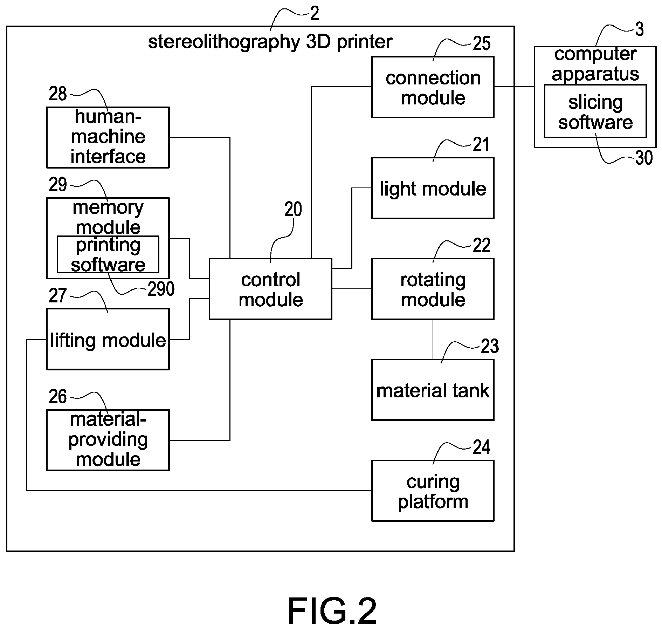

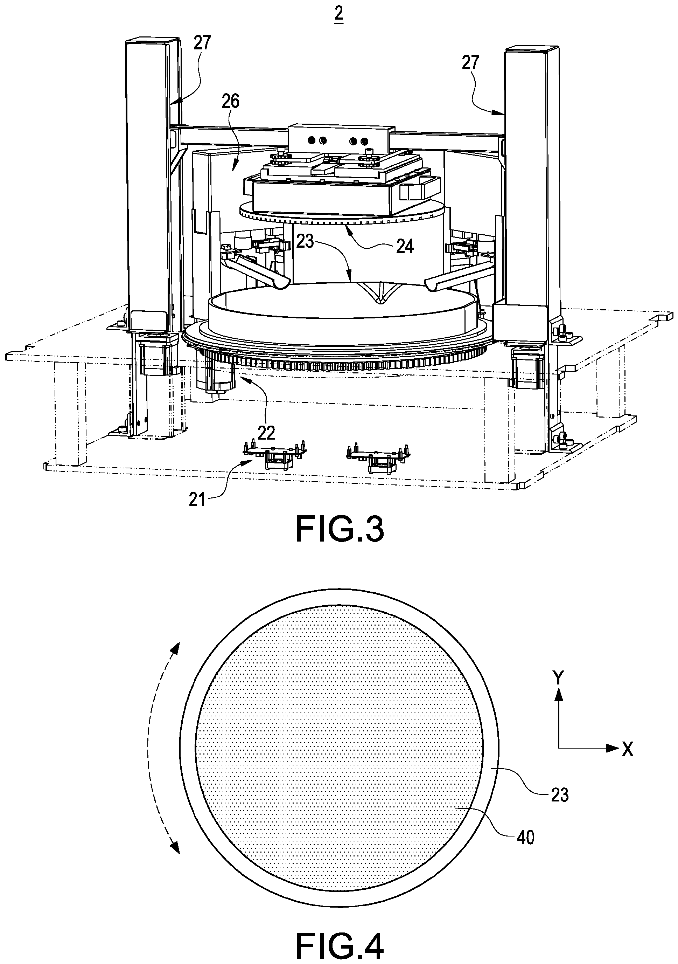

Please refer to Fig. 2 to Fig. 4 simultaneously, FIG. 2 is an architecture diagram of a stereolithography 3D printer according to one embodiment of the present disclosed example, Fig. 3 is a schematic view of appearance of a 3D printer according to one embodiment of the present disclosed example, and Fig. 4 is a look-down schematic view of moving material tank according to one embodiment of the present disclosed example. A stereolithography 3D printer 2 is disclosed by this embodiment. The stereolithography 3D printer 2 mainly comprises a light module 21, a rotating module 22, a material tank 23, a curing platform 24 and a control module 20 electrically connected to above devices.

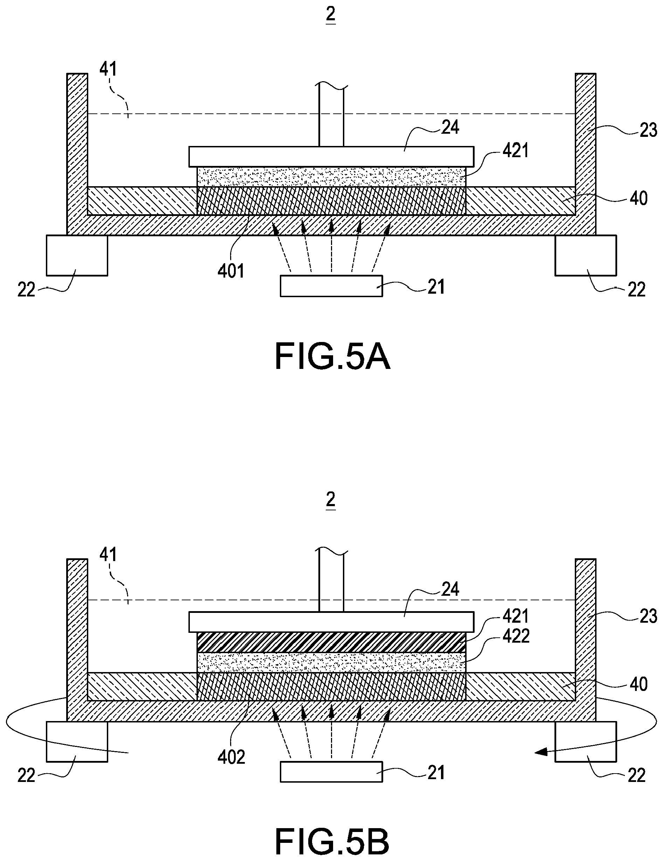

The control module 20 is configured to control the stereolithography 3D printer 2 to execute the stereolithography 3D printing. The light module 21 is configured to emit the beams heading to the curing platform 24 (the light module 21 may be a single point light source, a line light source or a plane light source). The beams penetrate the light-curable materials and irradiate one or more designated print position(s) on the curing platform 24 for curing the light-curable materials (such as curing the light-curable materials 41 between the curing platform 24 and the demodeling film 40 as shown in Fig. 5A to Fig. 6D) in the light path.

The material tank 23 is used to accommodate the colloidal (or semi-colloidal) light-curable materials 41, such as UV curable resin. One of the exemplary embodiments, when the stereolithography 3D printer 2 is an uplight stereolithography 3D printer (as shown in Fig. 3), a bottom case of the material tank 23 may be made from the light-transmissive material (such as light-transmissive acrylic), and one layer of light-transmissive demodeling film (such as the demodeling film 40 shown in Fig.4, the demodeling film 40 may be made from light-transmissive silicone or Teflon) is laid on the bottom inside the tank. Thus, the beams irradiated by the light module 21 may transmit through the bottom case of the material tank 23 and the demodeling film 40 to irradiate the light-curable materials 41 in the material tank 23.

The moving module 22 is connected to the material tank 23, and is configured to be controlled by the control module 20 to horizontally rotate (clockwise, counterclockwise or both) the material tank 23 for making the light-curable materials 41 accommodated in the material tank 23 flow caused by rotation of the material tank 23. The print platform 24 is used to carry the manufactured 3D physical model.

One of the exemplary embodiments, the stereolithography 3D printer 2 further comprises a material-providing module 26 electrically connected to the control module 20. The material-providing module 26 accommodates the colloidal (or semi-colloidal) light-curable materials 41 and has an ability of pouring the designated volume of light-curable materials 41 (with designated flow rate) into the material tank 23.

One of the exemplary embodiments, the stereolithography 3D printer 2 further comprises a connection module 25 electrically connected to the control module 20, such as USB module, PCI bus module, Wi-Fi module or Bluetooth module. The connection module 25 is configured to connect to the computer apparatus 3 and receive the print data from the computer apparatus 3. One of the exemplary embodiments, the computer apparatus 3 stores a slicing software 30, the computer apparatus 3 may execute the slicing software 30 to execute a slicing process on the 3D model data for obtaining the multiple layers of print data (such as a plurality of 2D images), and transfer the print data to the connection module 25 for 3D printing.

One of the exemplary embodiments, the stereolithography 3D printer 3 further comprises a lifting module 27 electrically connected to the control module 20 and connected to the curing platform 24. The lifting module 27 may be controlled by the control module 20 to move the curing platform 24 along a default axis (such as lifting in the Z-axis).

One of the exemplary embodiments, the stereolithography 3D printer 2 further comprises a human-machine interface 28 (such as buttons, a monitor, indicators, a buzzer, or any combination of above elements) electrically connected to the control module 20. The human-machine interface 28 is configured to receive a user operation and output the print-related information.

One of the exemplary embodiments, the stereolithography 3D printer 2 further comprises a memory module 29 electrically connected to the control module 20. The memory module 29 is used to store data.

One of the exemplary embodiments, the memory module 29 comprises a non-transient computer-readable recording media, above non-transient computer-readable recording media stores a printing software 290, such as a firmware or an operating system of the stereolithography 3D printer 2. A plurality of computer-executable codes is recorded in above-mentioned printing software 290. The control module 20 may control the stereolithography 3D printer 2 to perform each step of the 3D printing method of each embodiment of the present disclosed example after execution of the print software 290.

Please refer to Fig. 5A and Fig. 5B simultaneously, Fig. 5A is a first sectional schematic view of delaying a time of a metamorphism happening according to one embodiment of the present disclosed example, and Fig. 5B is a second sectional schematic view of delaying a time of a metamorphism happening according to one embodiment of the present disclosed example. Fig. 5A and Fig. 5B are used to exemplary explain the technical problems solved by the present disclosed example that a life of the material tank is too short. Fig. 5A and Fig. 5B take printing a 3D physical model having a fixed horizontal width (such as cylinder or rectangular columnar) for example to explain.

As shown in Fig. 5A, when execution of printing the first layer, the region 401 of the demodeling film 40 is in a printing range (such as being under the worktop of the curing platform 24 and/or an irradiating range of the light module 21). The stereolithography 3D printer 2 makes the modeling plane (the worktop in this example) of the curing platform 24 be a default thickness (such as 0.1 millimeters) away from the demodeling film 40 by the lifting module 27, and controls the light module 21 to irradiate according to the first layer of print data for curing the light-curable materials 41 between the modeling plane and the region 401 into the first layer of slice physical model 421.

Then, as shown in Fig. 5, the stereolithography 3D printer 2 makes the modeling plane (such as the surface of the first layer (previous layer) of slice physical model 421) leave from the light-curable materials 41 in the material tank 23 by the lifting module 27, controls the material tank 23 to rotate by the rotating module 22 for making another region 402 of the demodeling film 40 move in the printing range (region 401 and region 402 can be partially overlapped or not overlapped). Then, after rotation, the stereolithography 3D printer 2 controls by the lifting module 27 to make the modeling plane of the curing platform 24 be the default thickness away from the demodeling film 40, and controls the light module 21 to irradiate according to the second layer (next layer) of print data for curing the light-curable materials 41 between the modeling plane and the region 402 and making the second layer of slice physical model 422 attach on the first layer of slice physical model 421.

Please be noted that a difference between an angle of the material tank (23) before rotation and an angle of the material tank (23) after rotation is the offset angle, the offset angle is less than 360 degrees and not zero. For example, the offset angle is 60 degrees, 90 degrees or 180 degrees.

One of the exemplary embodiments, the material tank 23 may be rotated more than 360 degrees. For example, the material tank 23 may be rotated for 450 degrees (360+90 degrees) clockwise, and the offset angle is 90 degrees. In another example, the material tank 23 may be rotated for 720 degrees (360x2+60 degrees) counterclockwise, and the offset angle is 60 degrees.

Thus, the present disclosed example can change the region of the demodeling film 40 located in the printing range via forming the angle difference of the material tank 23 after rotation.

Then, the stereolithography 3D printer 2 may perform above-mentioned steps repeatedly to print the multiple layers of slice physical models layer by layer and stack the multiple layers of slice physical models as the 3D physical model.

Because the stereolithography 3D printer 2 may use each region of the demodeling film 40 to execute the 3D printing alternately and evenly during printing, instead of over using any single region for 3D printing, the present disclosed example can substantially delay the time of the metamorphism happening in each region, and extend the life of the material tank 23. On the other hand, above-mentioned scheme of the present disclosed example can reduce the probability of the things that the material tank must be replaced with new one (or the demodeling film must be relaid) because of metamorphism in the single region.

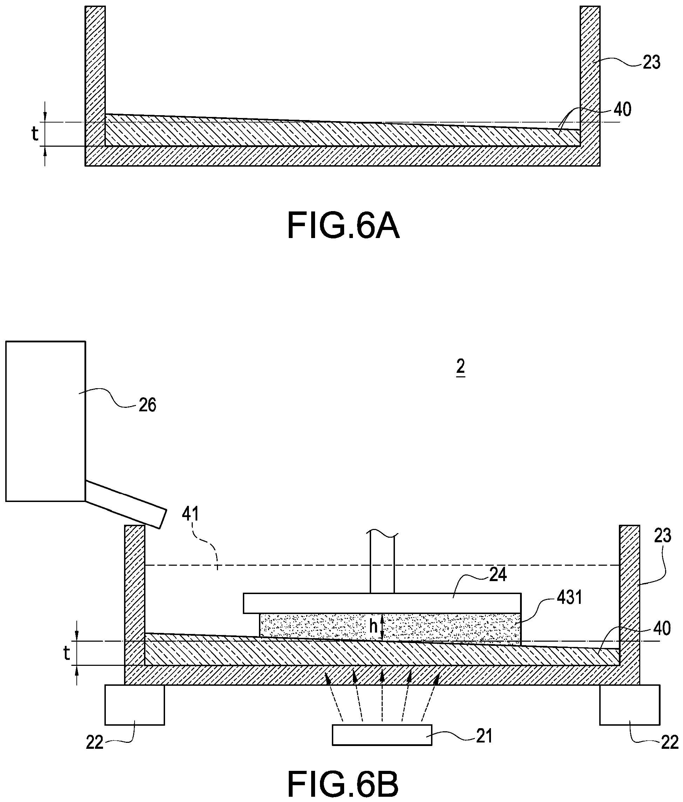

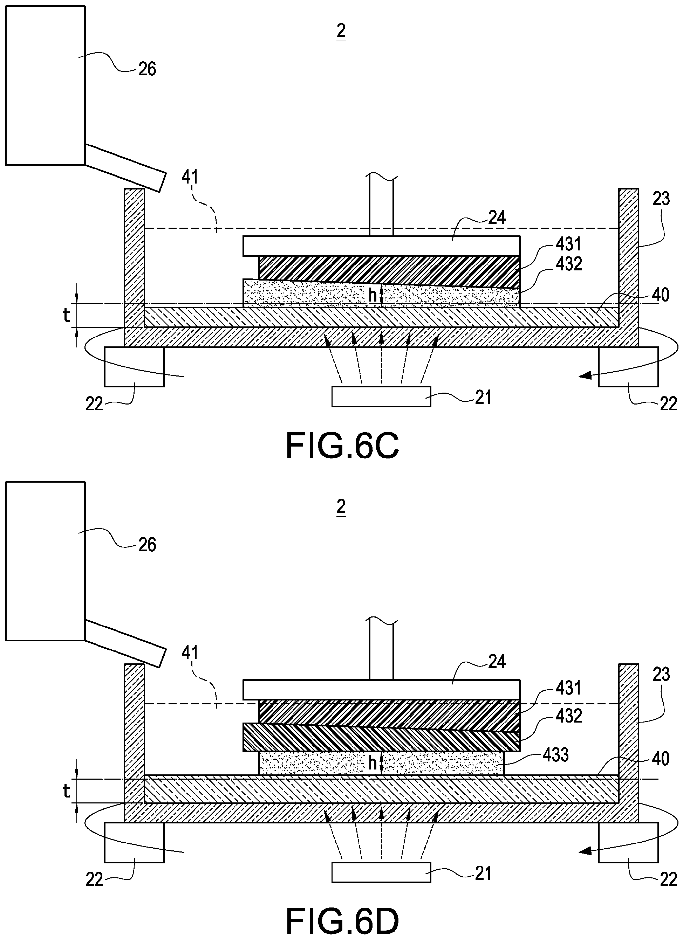

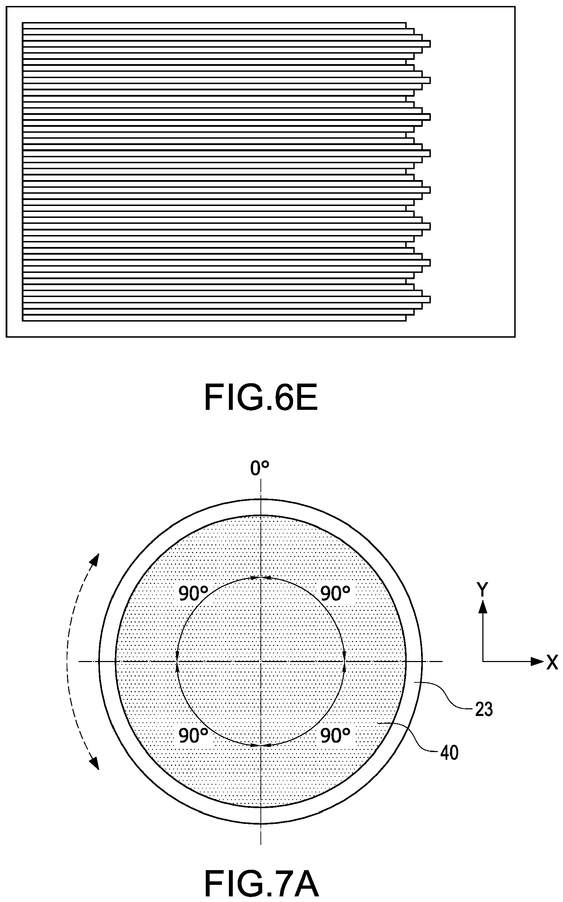

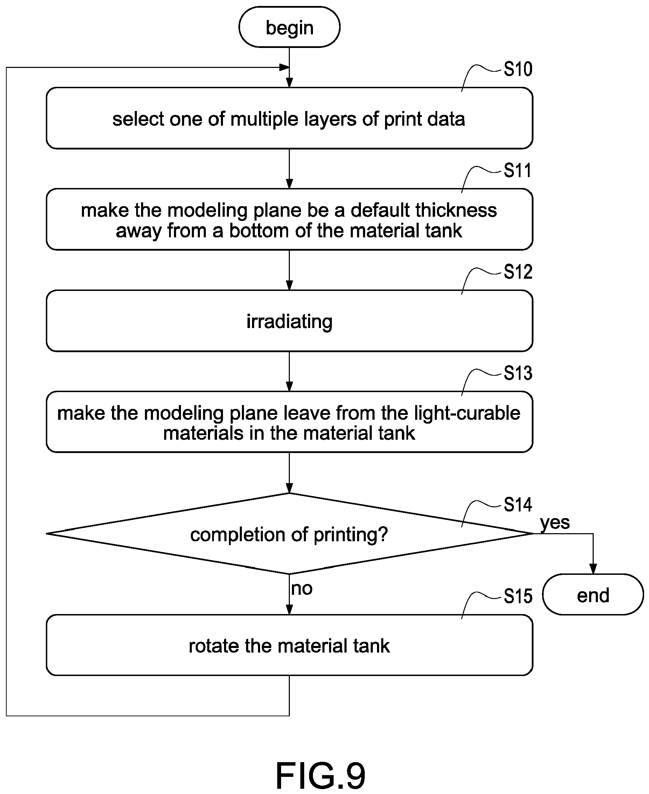

Please refer to Fig. 6A to Fig. 6E and Fig. 9 simultaneously, Fig. 6A is a first sectional schematic view of forming stripes according to one embodiment of the present disclosed example, Fig. 6B is a second sectional schematic view of forming stripes according to one embodiment of the present disclosed example, Fig. 6C is a third sectional schematic view of forming stripes according to one embodiment of the present disclosed example, Fig. 6D is a fourth sectional schematic view of forming stripes according to one embodiment of the present disclosed example, Fig. 6E is a schematic view of stripes according to one embodiment of the present disclosed example, and Fig. 9 is a flowchart of a 3D printing method according to a first embodiment of the present disclosed example.

The schematic views shown in Fig. 6A to Fig. 6E are used to cooperate with the flowchart shown in Fig. 9 for exemplary explaining the detailed implementation of above-mentioned technical scheme and the technical problem generated by above-mentioned technical scheme. Fig. 6A to Fig. 6B take printing a 3D physical model having a fixed horizontal width (such as cylinder or rectangular columnar) for example to explain.

More specifically, the status shown in Fig. 5A and Fig. 5B is ideal status, in the ideal status, a thickness of each position of the demodeling film 40 should be the same as each other (such as the thickness of each position of the demodeling film 40 is equal to a standard thickness t), however, because of defect in process, the demodeling film 40 does not usually be laid horizontally on the bottom of the material tank 23 (namely, there is a thickness difference in the demodeling film 40). As shown in Fig. 6A the left side of the laid demodeling film 40 is thicker than the right side, namely the thickness of the left side is greater than the standard thickness t, and the thickness of the right side is less than the standard thickness t. This makes the obviously horizontal stripes and the unsmooth surface be generated on the side surface of actual 3D physical model manufactured by the stereolithography 3D printer 2 when execution of 3D printing by above-mentioned technical scheme, instead of the smooth side surface of the 3D physical model smooth as shown in Fig. 5B.

Furthermore, when rotating the material tank 23 by the rotating module 22 and the thinner region of the demodeling film 40 is moved in the printing range (such as the right half of Fig. 6B or the Fig. 6C), a thickness of the light-curable materials 41 between the modeling plane and the thinner region of the demodeling film 40 is greater than the default thickness h. Moreover, above-mentioned thickness difference may make an effect in the angles and paths of refraction or scattering of light, and the light-curable materials 41 between the modeling plane and the thinner region of the demodeling film 40 are cured into one layer of slice physical model having a more protrudent outer edge after irradiation. A horizontal width of the slice physical model manufactured in above-mentioned status is greater than a horizontal width of the slice physical model (such as the slice physical models 421, 422 shown in Fig. 5A and Fig. 5B) manufactured in ideal status.

Conversely, when rotating the material tank 23 by the rotating module 22 and the thicker region of the demodeling film 40 is moved in the printing range (such as the left half of Fig. 6B or the Fig. 6D), a thickness of the light-curable materials 41 between the modeling plane and the thicker region of the demodeling film 40 is less than the default thickness h. Moreover, above-mentioned thickness difference may make an effect in the angles and paths of refraction or scattering of light, and the light-curable materials 41 between the modeling plane and the thicker region of the demodeling film 40 are cured into one layer of slice physical model having a more shrank outer edge after irradiation. A horizontal width of the slice physical model manufactured in above-mentioned status is less than the horizontal width of the slice physical model (such as the slice physical models 421, 422 shown in Fig. 5A and Fig. 5B) manufactured in ideal status.

The 3D printing method of each embodiment of the present disclosed example may be implemented by the stereolithography 3D printer 2 shown in Fig. 2 to Fig. 6D. The 3D printing method of this embodiment comprises the following steps.

Step S10: the control module 20 of the stereolithography 3D printer 2 selects one of the multiple layers of print data in order, such as the first layer of print data.

One of the exemplary embodiments, the multiple layers of print data may comprise a plurality of 2D images, each of the 2D images corresponds to a layer value and is used to describe a shape of the corresponding layer of slice physical model.

Step S11: the control module 20 controls the curing platform 24 to move by the lifting module 27 for making a vertical distance between the modeling plane (be the worktop of the curing platform 24 when printing the first layer, and be the top surface of the previous layer of slice physical model when printing the second or higher layer) of the curing platform 24 and the bottom of the material tank 23 (such as center of the demodeling film 40) be the default thickness h (as shown in Fig. 6B, the vertical distance between the modeling plane and the bottom of a body of the material tank 23 is equal to the sum of default thickness h and the standard thickness t of the demodeling film 40). One of the exemplary embodiments, the default thickness h is not greater than 0.1 millimeters, such as 0.1 millimeters or 0.05 millimeters.

Step S12: the control module 20 controls the light module 21 to irradiate heading to the modeling plane according to the selected layer of print data for printing one layer of slice physical model.

One of the exemplary embodiments, each layer of the print data is a 2D image, the control module 20 may control the light module 21 to irradiate heading to a plurality of positions respectively corresponding to a plurality of pixels of one layer of print data according to a plurality of pixel values of the pixels of the selected layer of print data for printing one layer of slice physical model (as the first layer of slice physical model 431 shown in Fig. 6B).

Please be noted that when the thicknesses of the different positions currently located in the printing range of the demodeling film 40 are inconsistent (in the example of Fig. 6B, the left half of the region currently located in the printing range is thicker, and the right half is thinner), the actual vertical distance of the right half may be greater than the default thickness h, and the actual vertical distance of the left half may be less than the default thickness h. This makes the thicknesses of the different positions of the manufactured first layer of slice physical model 431 are inconsistent (the left half of the first layer of slice physical model 431 is thinner, and the right half is thicker). Moreover, the thickness of the demodeling film 40 may affect the light-transmittance, and change the actual cured volume of the light-curable materials 41. For example, the left half of the first layer of slice physical model 431 is shrunk (namely less cured volume), and the right half is protruded (namely more cured volume).

Step S13: the control module 20 controls the curing platform 24 to move (such as rising) by the lifting module 27 for making the modeling plane (such as the top surface of the first layer of slice physical model 431) leave from the light-curable materials 41 in the material tank 23 (namely, make the 3D physical model leave from the light-curable materials 41). After the modeling plane leaves from the light-curable materials 41 in the material tank 23, the light-curable materials 41 in the material tank 23 may backfill a space occupied by the modeling plane previously via naturally flowing and making the liquid level revert to be horizontal.

Step S14: the control module 20 determines whether completion of 3D printing. For example, the control module 20 determines whether all of the multiple layers of slice physical models have been printed.

If the control module 20 determines that there is any layer of slice physical model which do not be printed (namely, the 3D printing is incomplete), the control module 20 performs the step S15. Otherwise, the control module 20 finishes printing.

Step S15: the control module 20 controls the material tank 23 to rotate by the rotating module 22 for moving another region (such as the region which both left half and right half are thinner as shown in Fig. 6C) of the demodeling film 40 in the printing range, wherein there is an angle difference between the angles of the material tank 23 before and after rotation (such as 1 degree or 30 degrees).

One of the exemplary embodiments, a scraper structure (not shown in figures) is arranged in the material tank (23), above scraper structure is used to stir the light-curable materials 41 in the material tank 23 and scrape the cured and sticky light-curable materials 41 away from the bottom (namely the demodeling film 40) of the material tank 23 during rotation of the material tank 23. Thus, by the scraper structure, the present disclosed example can speed up the flow of the light-curable materials 41 to mix the light-curable materials 41 quickly and evenly, and clean the demodeling film 40 for preventing the printing from failure caused by the cured light-curable materials 41 sticking the demodeling film 40.

Then, the control module 20 performs the steps S10-S14 again for printing the next layer of slice physical model, and so on, until all layers of slice physical models are printed completely and stack as the 3D physical model.

For example, as shown in Fig. 6C, the control module 2 of the stereolithography 3D printer 2 may select the second layer of print data (step S10), move the curing platform 24 by the lifting module 27 for making the vertical distance between the modeling plane (namely the top surface of the first layer of slice physical model 431) of the curing platform 24 and the center of the demodeling film 40 (take the thickness of the center is the standard thickness t) is the default thickness h (step S11, namely the vertical distance between the modeling plane and the bottom of the body of the material tank 23 is the sum of the default thickness h and the standard thickness t of the demodeling film 40). Then, the control module 20 controls the light module 21 to irradiate according to the second layer of print data (step S12) for manufacturing the second layer of slice physical model 432 and making the second layer of slice physical model 432 attach on the first layer of slice physical model 431. Moreover, because the region currently located in the printing range is thinner (the thickness of the region is less than the standard thickness t), the left half and the right half of the second layer of slice physical model are more protruded. Then, the control module 20 may control the lifting module 27 to raise the curing platform 24 for making the first layer of slice physical model 431 and the second layer of slice physical model leave the light-curable materials 41. Then, when determining that the printing is incomplete (step S14), the control module 20 controls the rotating module 22 to rotate the material tank 23 for moving the other region (such as the region which both left half and right half are thicker as shown in Fig. 6D, the thickness of the region is greater than the standard thickness t) in the printing range (step S15). Moreover, an angle difference between the angles of the material tank 23 before and after rotation is the default offset angle.

Then, the control module 20 continues to print the next layer of slice physical model. As shown in Fig. 6D, the control module 20 of the stereolithography 3D printer 2 may select the third layer of print data (step S10), and control the curing platform 24 to move by lifting module 27 for making a vertical distance between the top surface of the second layer of slice physical model 432 and the center of the demodeling film 40 (take the thickness of the center being the standard thickness t for example) be the default thickness h (step S11, namely, the vertical distance between the modeling plane and the bottom of the body of the material tank 23 is the sum of the default thickness h and the standard thickness t). Then, the control module 20 controls the light module 21 to irradiate according to the third layer of print data (step S12) for manufacturing the third layer of slice physical model 433 and making the third layer of slice physical model 433 attach on the second layer of slice physical model 432. Moreover, because the region currently located in the printing range is thicker, the left half and the right half of the third layer of slice physical model 433 are more shrank. Then, the control module 20 may control the lifting module 27 to raise the curing platform 24 for making all layers of slice physical models 431-433 leave the light-curable materials 41. Then, when determining that the printing is incomplete (step S14), the control module 20 controls the rotating module 22 to rotate the material tank 23 for moving the other region in the printing range (step S15). Moreover, an angle difference between the angles of the material tank 23 before and after rotation is the default offset angle. Thus, the stereolithography 3D printer 2 may repeatedly perform above-mentioned steps to print the multiple layers of slice physical models layer by layer and stack the multiple layers of slice physical models as the 3D slice physical model (the physical model shown in Fig. 6E is a part of an appearance of the whole 3D physical model).

Please be noted that this embodiment may rotate the material tank 23 before printing the next layer of slice physical model for delaying the time of the metamorphism happening in any region of the demodeling film 40 in above-mentioned embodiments, so as to make the adjacent layers of slice physical models be printing by the different regions of the demodeling film 40. However, the adjacent layers of slice physical models have the different horizontal widths from each other (in the ideal status, the adjacent layers of slice physical models should have the same horizontal width as each other) because the demodeling film 40 is uneven, such that the side surfaces of the manufactured 3D physical model are uneven and not smooth and the print quality of the slice physical model is reduced.

Moreover, the phenomenon will have a regular that the side surfaces of the manufactured 3D physical model being uneven and not smooth and show an obvious visual effect of stripes because each of angle differences (offset angle) generated by each time rotating the material tank 23 are the same as each other, such that the 3D physical model shows the bad visual effect.

Moreover, the phenomenon will have an irregular that the side surfaces of the manufactured 3D physical model being uneven and not smooth and show a more obvious visual effect of stripes if each of angle differences (offset angle) generated by each time rotating the material tank 23 are different from each other.

To solve above-mentioned problem, the present disclosed example further discloses a technical scheme having an ability of improving the stripe effect on the 3D physical model.

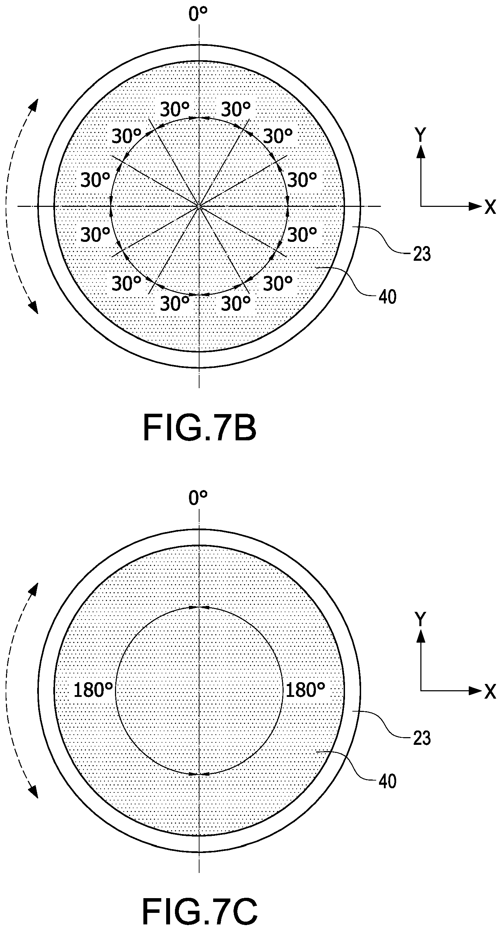

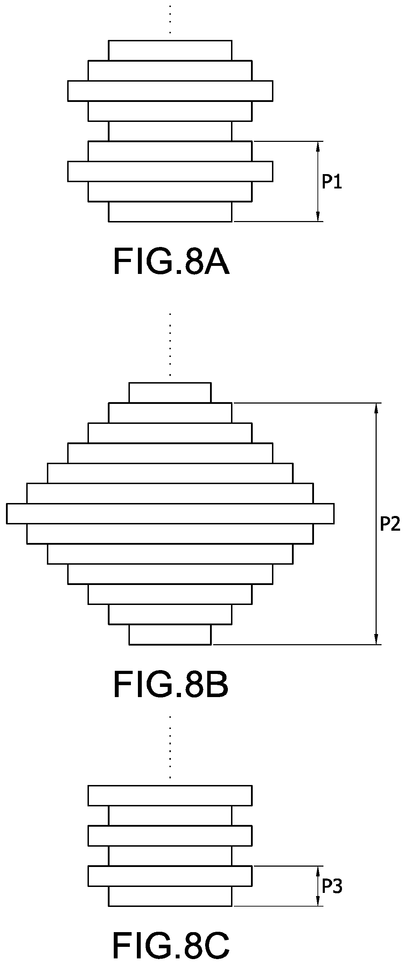

Please refer to Fig. 7A to Fig. 8C simultaneously, Fig. 7A is a schematic view of improving stripe effect according to one embodiment of the present disclosed example, Fig. 7B is a schematic view of improving stripe effect according to one embodiment of the present disclosed example, Fig. 7C is a schematic view of improving stripe effect according to one embodiment of the present disclosed example, Fig. 8A is a schematic view of stripes formed by Fig. 7A, Fig. 8B is a schematic view of stripes formed by Fig. 7B, and Fig. 8C is a schematic view of stripes formed by Fig. 7C.

A technical principle of the technical scheme provide by the present disclosed example will be explained below. It is related to the widths of the stripes that the stripe effect being obvious or not, and the width of each stripe is related to both the default thickness and the angle difference (the offset angle) generated by rotating the material tank 23. The offset angle is greater than 0 degrees and less than 360 degrees.

As shown in Fig. 7A, take the default thickness being 0.1 millimeters for example, of the offset angle is 90 degrees, any region of the demodeling film 40 will move to/through the starting position after four times of rotating the material tank 23 (namely 360 degrees). On the other hand, if the angle differences generated by rotating the material tank 23 before printing each layer of slice physical model are the same (offset angle), the stripe width P1 of each stripe shown on the 3D physical model is four times of the default thickness (as shown in Fig. 8A), such as 0.4 millimeters. As above examples, we can see that the offset angle is smaller, the stripe width is greater because the material tank 23 needs to rotate more times for making the same region of the demodeling film 40 move to/through the starting position. When the stripe width of each stripe is greater, the stripes are not easy to be detected by human vision.

Accordingly, one of the exemplary embodiments, the offset angle selected by the present disclosed example is configured to meet one of the following conditions:

(i) 0° < offset angle ≤ threshold angle; and
(ii) 360° - threshold angle ≤ offset angle < 360°,

wherein

$$\text{the threshold angle} = \frac{360° \times \text{default thickness}}{\text{threshold width}};$$

the default thickness is the thickness of each layer of slice physical model, the default thickness (such as less than 0.1 millimeters) may be a system default value or configured by a user before printing; the threshold width is obtained by complex analysis and experiments.

When the stripe width is greater than the threshold width, the phenomenon, that the side surfaces of the manufactured 3D physical model being uneven and not smooth, is gentle, and the stripes are not easy to be detected by the human vision.

For example, the threshold angle is 60 degrees if the default thickness is 0.1 millimeters, the threshold angle is 0.6 millimeters. When the offset angle is greater than 0 degrees and not less than 60 degrees, or not less than 300 degrees and less than 360 degrees, the stripe effect will be improved (namely, the stripes are not easy to be detected by human vision).

In another example, as shown in Fig. 7B, the same region of the demodeling film 40 will move to the starting position after twelve times of rotating the material tank 23 if the offset angle is 30 degrees (namely the condition (i) is fulfilled). On the other hand, if the angle differences generated by rotating the material tank 23 before printing each layer of slice physical model are the same (offset angle), the stripe width P2 of each stripe shown on the 3D physical model is twelve times of the default thickness (as shown in Fig. 8B). The stripe effect can be improved because the stripe width P2 (1.2 millimeters) is greater than the threshold width (0.6 millimeters).

Besides, when the offset angle is about equal to 180 degrees, each two adjacent layers of slice physical models are respectively printed by the two regions having a maximum thickness difference of the demodeling film 40 (if all of the angle differences generated by rotation before printing each layer are the same offset angle), so as to make the stripe width of each stripe is ultra-thin (such as double of the default thickness) and each stripe is not easy to be detected by human vision.

Accordingly, one of the exemplary embodiments, the present disclosed example further adds a condition (ii), the offset angle selected by the present disclosed example is configured to meet one of the following conditions:

(i) if the offset angle ≤ 180°, 0° < offset angle ≤ threshold angle;
(ii) if the offset angle >180°, 360° - threshold angle ≤ offset angle < 360°; and
(iii) if the offset angle ≤ 180°, 180° - threshold angle ≤ offset angle ≤ 180° + threshold angle.

For example, the threshold angle is 60 degrees if the default thickness is 0.1 millimeters and the threshold width is 0.6 millimeters. The stripe effect may be improved when the offset angle is within one of the three angle intervals of 0 degrees to 60 degrees, 120 degrees to 240 degrees, and 300 degrees to 360 degrees.

In another example, as shown in Fig. 7C, the same region of the demodeling film 40 will move to the starting position after two times of rotating the material tank 23 if the offset angle is 180 degrees. On the other hand, if the angle differences generated by rotating the material tank 23 before printing each layer of slice physical model are the same (offset angle), the stripe width P3 of each stripe shown on the 3D physical model is double of the default thickness (as shown in Fig. 8C). The stripe effect can be improved because the stripe width P3 of each stripe is ultra-thin (0.2 millimeters).

One of the exemplary embodiments, the offset angle may be 1 degree, 179 degrees, 181 degrees or 359 degrees, but this specific example is not intended to limit the scope of the present disclosed example.

Thus, the present disclosed example can effectively increase a life of the material tank and improve a stripe effect on the 3D physical model.

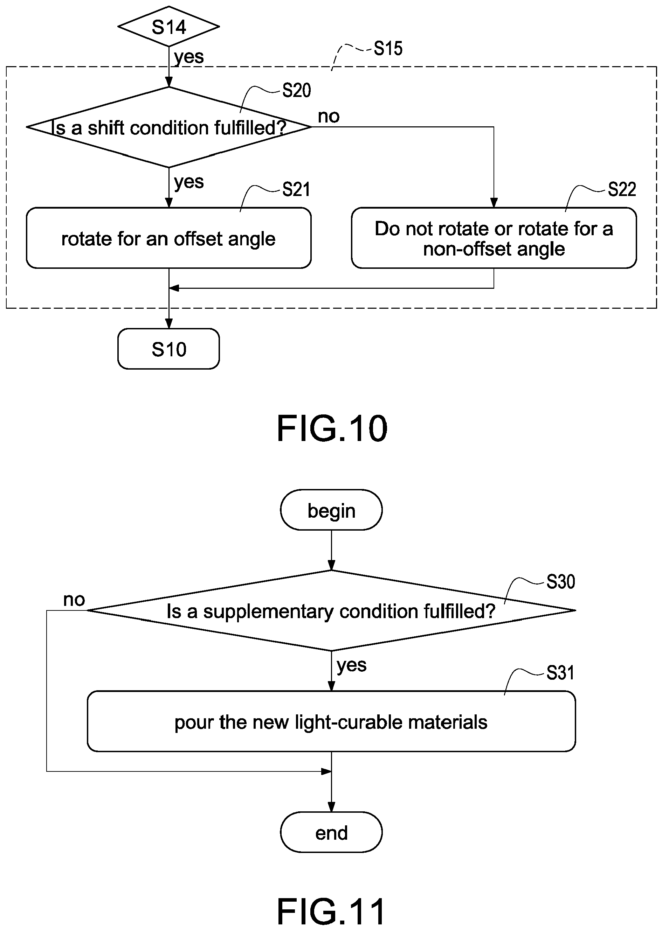

Please refer to Fig. 9 and Fig. 10 simultaneously, and Fig. 10 is a detailed flowchart of rotating material tank according to a second embodiment of the present disclosed example. In this embodiment, during the printing process of printing each layer of slice physical model, each rotating angle of the material tank 23 are not exactly the same as each other. Compare to the 3D printing method shown in Fig. 9, the step S15 of the 3D printing method of this embodiment may comprise following steps.

Step S20: the control module 20 determines whether a shift condition configured in advance is fulfilled. More specifically, above-mentioned shift condition is configured by a user or a developer in advance and stored in the memory module 29.

One of the exemplary embodiments, above-mentioned shift condition may be any combination of the following conditions: a layer value of the currently selected layer of the print data being equal to a default value or multiple of the default value, a default time elapsing (timing the default time) and so on, but this specific example is not intended to limit the scope of the present disclosed example.

For example, if the default value is equal to 1, the step S21 is performed by the material tank 23 before printing of each layer. In another example, if the default value is equal to two, the step S21 is performed by the material tank 23 before printing of either the odd layers or the even layers.

One of the exemplary embodiments, when the offset angle meets above-mentioned condition (iii), the present disclosed example can provide a better improvement on stripes effect if the default value is configured to be less than three (such as one or two).

When the control module 20 determines that the shift condition is fulfilled, the control module 20 performs a step S21: the control module 20 controlling the material tank 23 to rotate by the rotating module 22 for making another region of the demodeling film 40 be in the printing range, a difference between an angle of the material tank (23) before rotation and an angle of the material tank (23) after rotation is the offset angle. Then, the step S10 is performed.

When the control module 20 determines that the shift condition is not fulfilled, the control module 20 performs a step S22: the control module 20 does not rotate the material tank 23, or rotates the material tank 23 by the rotating module 22 for the full circle(s). Namely, there is not the difference between the angle of the material tank (23) before rotation and the angle of the material tank (23) after rotation. Then, the step S10 is performed.

Please be noted that a purpose to rotate the material tank 23 for the full circle(s) is that mixing the light-curable materials 41 quickly and evenly and stirring the light-curable materials 41 in the material tank 23 by the scraper structure. After rotation, the region of the demodeling film 40 in the printing range does not be changed.

The present disclosed example can effectively increase the widths of stripes and making the stripes be not easily perceived by the human vision via rotating the material tank 23 before printing partial layers of the slice physical model for making the difference between the angle of the material tank (23) before rotation and the angle of the material tank (23) after rotation meet the offset angle.

Please refer to Fig. 9 and Fig. 11 simultaneously, Fig. 11 is a detailed flowchart of supplement to light-curable materials according to a third embodiment of the present disclosed example. A function for a supplement to materials is implemented by this embodiment of the present disclosed example, the function has an ability of automatic supplement of the new light-curable materials 41 when the light-curable materials 41 in the material tank 23 is insufficient (or possibly insufficient). Compare to the 3D printing method shown in Fig. 9, the 3D printing method of this embodiment may comprise following steps.

Step S30: the control module 20 determines whether a supplementary condition configured in advance is fulfilled. More specifically, above-mentioned supplementary condition is configured by a user or a developer in advance and stored in the memory module 29.

One of the exemplary embodiments, the supplementary condition may be any combination of following conditions: the time before printing the first layer of slice physical model (such as receipt of a print instruction or completion of loading the next layer of print data), each time the designated layers (such as 10 layers) of slice physical models 42 being printed, each time the designated volume of slice physical models 42 being printed, a depth of the liquid level of the light-curable materials 41 in the material tank 23 is lower than a default depth and so on.

If the supplementary condition is fulfilled, the control module 20 performs the step S31. Otherwise, the control module 20 terminates this detection.

Step S31: the control module 20 controls the material-providing module 26 to pour the new light-curable materials 41 into the material tank 23.

One of the exemplary embodiments, the material-providing module 26 pours the stored light-curable materials 41 into the material tank 23 by a transportation pipe (as shown in Fig. 3 and Fig. 6B to Fig. 6D).

Thus, the present disclosed example can automatically supplement the new light-curable materials 41 into the material tank 23.

**Claims**

1. A 3D printing method applied to a stereolithography 3D printer (2), the stereolithography 3D printer comprising a light module (21), a curing platform (24), a rotating module (22) and a material tank (23), the 3D printing method comprising following steps:

   a) selecting one layer of print data;
   b) making a modeling plane of the curing platform (24) be a default thickness (h) away from a bottom of the material tank (23);
   c) controlling the light module (21) to irradiate heading to the modeling plane according to the selected layer of print data for printing one layer of slice physical model (421-422, 431-433);
   d) making the modeling plane leave from light-curable materials (41) in the material tank (23);
   e) rotating the material tank (23) by the rotating module (22), wherein a difference between an angle of the material tank (23) before rotation and an angle of the material tank (23) after rotation is an offset angle, the offset angle is within one of three angle intervals, the three angle intervals are 0 degrees to 60 degrees, 120 degrees to 240 degrees, and 300 degrees to 360 degrees; and

f) performing the step a) to the step e) repeatedly until all of the multiple layers of slice physical models have been printed and stacked as a 3D physical model.

2. The 3D printing method according to claim 1, wherein the step e) is configured to rotate the material tank (23) by the rotating module (22) when a shift condition is fulfilled.

3. The 3D printing method according to claim 2, wherein the shift condition is a layer value of the layer of print data selected currently being equal to a default value or multiple of the default value.

4. The 3D printing method according to claim 3, wherein the default value is within the angle interval of 120 degrees to 240 degrees, the default value is either one or two.

5. The 3D printing method according to claim 2, further comprising a step g) after the step d) rotating the material tank (23) by the rotating module (22) when the shift condition is not fulfilled, wherein the difference between the angle of the material tank (23) before rotation and the angle of the material tank (23) after rotation in the step g) is zero degrees; the step f) is configured to perform the step a) to the step e) and the step f) repeatedly.

6. The 3D printing method according to claim 1, wherein the material tank (23) comprises a scraper structure; the step e) is configured to rotating the material tank (23) for making the scraper structure stir the light-curable materials (41) in the material tank (23) and scrape the cured light-curable materials (41) away from the bottom of the material tank (23).

7. The 3D printing method according to claim 1, wherein the default thickness (h) is not greater than 0.1 millimeter.

8. The 3D printing method according to claim 1, wherein each layer of print data is a 2D image; the step c) is configured to control the light module (21) to irradiate respectively heading to a plurality of positions of the curing platform (24) corresponding to a plurality of pixels of each layer of print data for printing one layer of slice physical model (421-422, 431-433) according to a plurality of pixel values of the pixels of each layer of print data.

9. The 3D printing method according to claim 1, further comprising a step h) controlling a material-providing module (26) of the stereolithography 3D printer (2) to pour the new light-curable materials (41) into the material tank (23) when a supplementary condition is fulfilled.

10. The 3D printing method according to claim 9, wherein the supplementary condition comprises at least one of: reception of a printing instruction, printing a default number of layers of slice physical models (421-422, 431-433) each time, printing a default volume of slice physical models (421-422, 431-433) each time, and a liquid level depth of the light-curable materials (41) in the material tank (23) being lower than a default depth.

FIG.1A

FIG.1B

FIG.2

EP 3 620 291 A1

FIG.3

FIG.4

13

**FIG.5A**

**FIG.5B**

FIG.6A

FIG.6B

FIG.6C

FIG.6D

FIG.6E

FIG.7A

FIG.7B

FIG.7C

FIG.8A

FIG.8B

FIG.8C

begin

select one of multiple layers of print data ⌐～S10

make the modeling plane be a default thickness away from a bottom of the material tank ⌐～S11

irradiating ⌐～S12

make the modeling plane leave from the light-curable materials in the material tank ⌐～S13

completion of printing? ⌐～S14
yes

no

rotate the material tank ⌐～S15

end

FIG.9

S14

yes

S15

S20

Is a shift condition fulfilled?

no

yes

S21

rotate for an offset angle

S22

Do not rotate or rotate for a non-offset angle

S10

# FIG.10

begin

S30

Is a supplementary condition fulfilled?

no

yes

S31

pour the new light-curable materials

end

# FIG.11

Europäisches
Patentamt

European
Patent Office

Office européen
des brevets

**EUROPEAN SEARCH REPORT**

Application Number

EP 18 21 1613

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 3 204 217 A1 (X DEV LLC [US])<br>16 August 2017 (2017-08-16)<br>* paragraph [0006] - paragraph [0008] *<br>* paragraph [0021] - paragraph [0022] *<br>* paragraph [0025] *<br>* paragraph [0031] *<br>* paragraph [0035] - paragraph [0036] *<br>* paragraph [0051] *<br>* paragraph [0057] *<br>* paragraph [0063] *<br>* paragraph [0096] *<br>* figure 3A * | 1-3,6-10<br><br>4,5 | INV.<br>B29C64/129<br>B29C64/393<br>B29C64/241<br>B33Y10/00<br>B33Y50/02 |
| X<br>A | EP 2 996 852 A1 (AUTODESK INC [US])<br>23 March 2016 (2016-03-23)<br>* paragraph [0006] - paragraph [0011] *<br>* paragraph [0019] *<br>* paragraph [0081] - paragraph [0083] *<br>* paragraph [0094] - paragraph [0095] *<br>* figure 4 * | 1-4,7-10<br><br>5,6 | |
| A | US 2018/133978 A1 (YEN CHAO-YU [TW] ET AL)<br>17 May 2018 (2018-05-17)<br>* paragraph [0005] - paragraph [0008] *<br>* paragraph [0013] *<br>* paragraph [0017] - paragraph [0018] *<br>* paragraph [0020] - paragraph [0021] *<br>* figure 1 *<br>* figure 3 * | 1-10 | TECHNICAL FIELDS<br>SEARCHED (IPC)<br><br>B29C<br>B33Y |
| A | US 2016/368210 A1 (CHEN YONG [US] ET AL)<br>22 December 2016 (2016-12-22)<br>* paragraph [0002] - paragraph [0004] *<br>* paragraph [0030] *<br>* paragraph [0032] *<br>* paragraph [0055] *<br>* figure 6 * | 1-10 | |

-/--

The present search report has been drawn up for all claims

| Place of search | Date of completion of the search | Examiner |
|---|---|---|
| The Hague | 21 June 2019 | Utrata, Wendelin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 18 21 1613

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2016/129631 A1 (CHEN PENG-YANG [TW] ET AL) 12 May 2016 (2016-05-12)<br>* paragraph [0007] - paragraph [0010] *<br>* paragraph [0038] *<br>* paragraph [0040] - paragraph [0041] *<br>* paragraph [0045] *<br>* paragraph [0048] *<br>* claims 1,2,3 *<br>* figures 4B,4C *<br>----- | 1-10 | |
| A | WO 2017/106082 A1 (3M INNOVATIVE PROPERTIES CO [US])<br>22 June 2017 (2017-06-22)<br>* page 6, line 7 - line 12 *<br>* page 14, line 25 - line 32 *<br>----- | 9,10 | |

TECHNICAL FIELDS
SEARCHED      (IPC)

The present search report has been drawn up for all claims

| Place of search | Date of completion of the search | Examiner |
|---|---|---|
| The Hague | 21 June 2019 | Utrata, Wendelin |

EPO FORM 1503 03.82 (P04C01)

## ANNEX TO THE EUROPEAN SEARCH REPORT
## ON EUROPEAN PATENT APPLICATION NO.

EP 18 21 1613

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2019

| Patent document cited in search report | | Publication date | Patent family member(s) | | Publication date |
|---|---|---|---|---|---|
| EP 3204217 | A1 | 16-08-2017 | CN | 107073815 A | 18-08-2017 |
| | | | EP | 3204217 A1 | 16-08-2017 |
| | | | US | 2016096331 A1 | 07-04-2016 |
| | | | WO | 2016057372 A1 | 14-04-2016 |
| EP 2996852 | A1 | 23-03-2016 | EP | 2996852 A1 | 23-03-2016 |
| | | | GB | 2514139 A | 19-11-2014 |
| | | | US | 2014339741 A1 | 20-11-2014 |
| | | | WO | 2014186463 A1 | 20-11-2014 |
| US 2018133978 | A1 | 17-05-2018 | CN | 108068311 A | 25-05-2018 |
| | | | EP | 3323615 A1 | 23-05-2018 |
| | | | US | 2018133978 A1 | 17-05-2018 |
| US 2016368210 | A1 | 22-12-2016 | NONE | | |
| US 2016129631 | A1 | 12-05-2016 | CN | 105643925 A | 08-06-2016 |
| | | | KR | 20160055707 A | 18-05-2016 |
| | | | TW | 201617237 A | 16-05-2016 |
| | | | US | 2016129631 A1 | 12-05-2016 |
| WO 2017106082 | A1 | 22-06-2017 | CN | 108367490 A | 03-08-2018 |
| | | | EP | 3390003 A1 | 24-10-2018 |
| | | | JP | 2018537319 A | 20-12-2018 |
| | | | KR | 20180095546 A | 27-08-2018 |
| | | | US | 2018361659 A1 | 20-12-2018 |
| | | | WO | 2017106082 A1 | 22-06-2017 |

EPO FORM P0459

For more details about this annex : see Official Journal of the European Patent Office, No. 12/82